(19) **Europäisches Patentamt / European Patent Office / Office européen des brevets**

(11) **EP 1 986 187 A1**

(12) **EUROPEAN PATENT APPLICATION**
published in accordance with Art. 158(3) EPC

(43) Date of publication:
**29.10.2008 Bulletin 2008/44**

(21) Application number: **07714384.0**

(22) Date of filing: **16.02.2007**

(51) Int Cl.:
**G11B 7/135** (2006.01)   **G03H 1/26** (2006.01)
**G11B 7/0065** (2006.01)   **G11B 7/09** (2006.01)

(86) International application number:
**PCT/JP2007/052854**

(87) International publication number:
**WO 2007/094456 (23.08.2007 Gazette 2007/34)**

(84) Designated Contracting States:
**DE GB**

(30) Priority: **16.02.2006   JP 2006039747**

(71) Applicant: **Sony Corporation**
**Minato-ku**
**Tokyo 108-0075 (JP)**

(72) Inventors:
- **SAITO, Kimihiro**
  **Tokyo 108-0075 (JP)**
- **KOBAYASHI, Seiji**
  **Tokyo 108-0075 (JP)**

(74) Representative: **Körber, Martin Hans**
**Mitscherlich & Partner**
**Sonnenstrasse 33**
**80331 München (DE)**

(54)   **OPTICAL RECORDING/REPRODUCING DEVICE**

(57)   An optical recording and reproducing apparatus is provided for recording standing wave information on an optical recording medium and reproducing standing wave information from an optical recording medium. The optical recording and reproducing apparatus includes an optical head configured to separate a laser beam emitted from a light source (1) into three beams and emit, using an objective lens (7), two beams A and B of the three separate beams into an optical disk (8) having a reflecting surface (10) from the same side of the optical disk (8) so that a focal position SF of the one laser beam A reaching the reflecting surface is the same as a focal position of the other laser beam B after returning from the reflecting surface. The optical recording and reproducing apparatus records standing waves inside the optical disk in a multilayer structure using the two laser beams emitted from the optical head so as to have the same focal position SF, and reads out information from a reflected beam obtained by emitting the laser beam A of the two laser beams.

FIG. 1

**Description**

Technical Field

The present invention relates to an optical recording and reproducing apparatus for recording information on a recording medium that changes the index of refraction thereof in accordance with the intensity of light using standing waves and reproducing standing wave information recorded on the recording medium.
This application claims benefit of the Japanese Patent Application No. 2006-39747 filed on February 16, 2006, which is hereby incorporated by reference.

Background Art

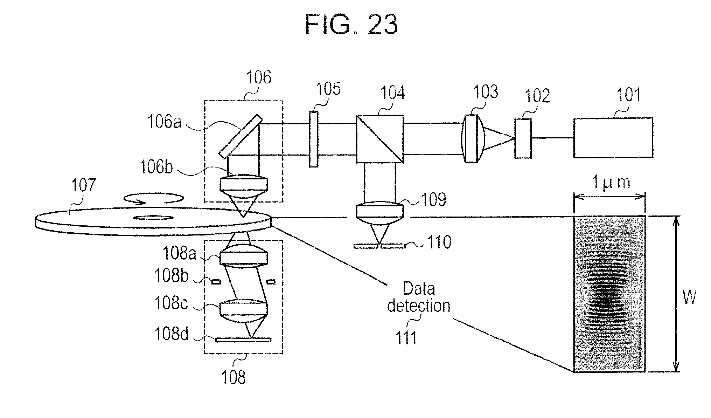

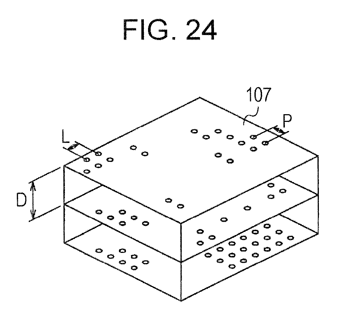

In general, optical disk systems using a recording medium including an optical disk, such as a Compact Disc (CD), a Digital Versatile Dick (DVD), and a Blu-ray Disc (trade name), are configured so as to contactlessly read out a slight change in the index of refraction formed on one side of a disk using a lens, such as an objective lens for microscopes, and reproduce recorded information.
The size of a light spot converged on an optical disk is determined to be about $\lambda/NA$ ($\lambda$: the wavelength of illumination light, NA: the numerical aperture). The resolution is proportional to this value. For example, a Blu-ray Disc (trade name) having a diameter of 12 cm and a recording capacity corresponding to about 25 GB is described in detail in Y. Kasami, Y. Kuroda, K. Seo, O. Kawakubo, S. Takagawa, M. Ono, and M. Yamada, Jpn. J. Appl. Phys., 39, 756(2000) (Document 1). In addition, I. Ichimura et a1, Technical Digest of ISOM'04, pp52, Oct. 11-15, 2005, Jeju Korea (Document 2) describes a technology for increasing the recording capacity by forming a plurality of stacked recording layers in an optical disk. On the other hand, R. R. Mcleod er al., "Microholographic multilayer optical disk data stowage," Appl. Opt., Vol. 44, 2005, pp3197 (Document 3) describes a method for recording information using standing waves. As shown in Fig. 23, this apparatus using a holder method has a configuration in which, first, a light beam output from an optical head 106 is focused on a photopolymer disk 107 that is a medium having an index of refraction varying in accordance with the light intensity of an emitted light beam. Thereafter, the light beam is focused again to the same focal position in the reverse direction using a reflecting unit 108 provided near the back surface of the disk 107.
In the apparatus illustrated in Fig. 23, optical waves of a laser beam emitted from a laser diode 101 are modulated by an acousto-optic (AO) modulator and are converted to a collimated light beam by a collimator lens 103. Thereafter, the laser beam passes through a polarization beam splitter (PBS) and is circularly polarized by a 1/4 wavelength plate (QWP) 105. The laser beam is then reflected off a mirror 106a disposed in the optical head 106 used for recording and reproducing purposes, is condensed by an objective lens 106b, and is emitted to the disk 107 being rotated by a spindle. The laser beam that was focused to a focal point inside the disk 107 is reflected by the reflecting unit 108 disposed near the back surface of the disk 107 and is focused to the same focal point inside the disk 107 from the back surface side of the disk. The reflecting unit 108 includes a convex lens 108a, a shutter 108b, a convex lens 108d, and a reflecting mirror 108d. As a result, as shown in Fig. 24, by forming small holograms of a light spot size, information can be recorded. The holograms are formed by light spots having controlled focal points so as to form the same plane inside the disk 107. Accordingly, in the disk, the holograms are formed across a plurality of layers. That is, the disk 107 has a multilayer structure. A distance D between the layers is, for example, 22.5 $\mu$m. A distance between tracks in the same layer (a track pitch) L is, for example, 2 $\mu$m. In addition, a distance between marks formed by the hologram (a mark pitch) P is, for example, 1.5 $\mu$m. By recording information in the medium of the disk 107 in a layered structure in this manner, the same amount of information as that stored in several widely used optical disks, the number of which is the same as the number of layers on the disk 107, can be recorded in the disk 107.
When reproducing hologram data from the disk 107 containing the recorded holograms, the following operation is performed without using the reflecting unit 108. As illustrated in Fig. 23, a reproducing laser beam is emitted from the optical head 106 to a hologram mark inside the disk. The polarization plane of reflected light of the reproducing laser beam from the disk 107 is polarized 90° by the 1/4 wavelength plate 105 again and is reflected by a PBS 104. The light beam is converged by a converging lens 109 and is read out by a data detector 111, such as a photodetector, through a pin hole 110. Thus, the information is identified.

Disclosure of Invention

Technical Problem

However, in the optical recording and reproducing apparatus that records information using standing waves as shown in Fig. 23, the optical systems, such as the optical head 106 and the reflecting unit 108, need to be disposed at either side of the disk 107. Accordingly, the entire optical system or the drive system becomes large in size and complexity.

Accordingly, it is a technical object of the present invention to provide an optical recording and reproducing apparatus for recording standing wave information on an optical recording medium and reproducing the standing wave information recorded on the optical recording medium without increasing the size and the complexity of the entire optical system or the drive system.

According to the present invention, an optical recording apparatus for recording information on a recording medium having an index of refraction that varies in accordance with the intensity of a light beam using standing waves is provided. The optical recording apparatus includes an optical head configured to emit, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface. Standing waves are recorded inside the recording medium in a multilayer structure using the two laser beams emitted by the optical head so as to have the same focal position.

In addition, according to the present invention, an optical reproducing apparatus for reproducing standing wave information from the recording medium having an index of refraction that varies in accordance with the intensity of a light beam and having the information recorded therein using standing waves is **characterized in that** standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface, and information formed from the standing waves is read out from the reflecting surface by emitting either one of the two laser beams.

Furthermore, according to the present invention, an optical recording and reproducing apparatus for recording information on a recording medium having an index of refraction that varies in accordance with the intensity of a light beam using standing waves and reproducing the standing wave information from the recording medium is characterized in that it includes an optical head configured to emit, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface. Standing waves are recorded inside the recording medium in a multilayer structure using the two laser beams emitted so as to have the same focal position by the optical head, and information in the form of the standing waves output from the reflecting surface is read out by emitting either one of the two laser beams.

Still furthermore, according to the present invention, an optical recording method is provided for recording information on a recording medium having an index of refraction that varies in accordance with the intensity of a light beam using standing waves. In the optical recording method, the standing waves are recorded inside the recording medium in a multilayer structure by emitting, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface.

Yet still furthermore, according to the present invention, an optical recording and reproducing method is provided for recording information on a recording medium having an index of refraction that varies in accordance with the intensity of a light beam using standing waves and reproducing the standing wave information from the recording medium. The optical recording and reproducing method is characterized in that it includes emitting, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface, recording, using an optical head, standing waves in the recording medium in a multilayer structure using the two laser beams emitted so as to have the same focal position, and reading out the information in the form of standing waves output from the reflecting surface by emitting either one of the two laser beams.

Yet still furthermore, according to the present invention, an optical reproducing apparatus for reproducing standing wave information from a recording medium having an index of refraction that varies in accordance with the intensity of a light beam and having the information recorded therein using standing waves is **characterized in that** the standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface, and the information formed from the standing waves is read out from the reflecting surface by emitting either one of the two laser beams.

Yet still furthermore, according to the present invention, a recording medium having an index of refraction that varies in accordance with the intensity of a light beam and hawing information recorded therein using standing waves is **characterized in that** the standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface. Further features and advantages of the present invention will become apparent from the following detailed description of exemplary embodiments with reference to the attached drawings.

Brief Description of Drawings

[Fig. 1] Fig. 1 is a block diagram of an optical recording and reproducing apparatus according to an embodiment of the present invention.
[Fig. 2] Fig. 2 illustrates a manner in which a laser beam converged by an objective lens is made incident on a disk.
[Fig. 3] Fig. 3 illustrates optical paths [A] and [B] of two laser beams in the optical recording and reproducing apparatus.
[Fig. 4] Fig. 4 illustrates the structure of a relay lens.
[Fig. 5] Figs. 5A, 5B, and 5C illustrate a change in focus in a recording medium caused by the relay lens.
[Fig. 6] Fig. 6 is a diagram illustrating recording of a grating in a recording medium.
[Fig. 7] Fig. 7 is a characteristic diagram showing a numerical aperture NA vs. the diffraction efficiency.
[Fig. 8] Fig. 8 is a characteristic diagram showing a change in an index of refraction $\Delta$n vs. the diffraction efficiency.
[Fig. 9] Fig. 9 is a characteristic diagram showing a light irradiation amount vs. a change in an index of refraction.
[Fig. 10] Fig. 10 illustrates a calculation area of the thickness of a grating.
[Fig. 11] Fig. 11 is a characteristic diagram showing a layer-to-layer distance vs. the diffraction efficiency.
[Fig. 12] Fig. 12 illustrates a light amount detected when a normal small two-dimensional reflection mark (2-D) is remote from a focal position.
[Fig. 13] Fig. 13 is a characteristic diagram illustrating a result of measurement shown in Fig. 12.
[Fig. 14] Fig. 14 is a characteristic diagram illustrating a relationship between defocus and a signal.
[Fig. 15] Fig. 15 is a characteristic diagram illustrating a light amount detected when a mark recorded by the present invention is remote from the focal position.
[Fig. 16] Fig. 16 is a characteristic diagram illustrating a result of measurement shown in Fig. 15.
[Fig. 17] Fig. 17 is a characteristic diagram illustrating a relationship between defocus and a signal.
[Fig. 18] Fig. 18 is a characteristic diagram showing a layer-to-layer distance vs. the crosstalk.
[Fig. 19] Fig. 19 illustrates a characteristic diagram between a layer-to-layer distance and the jitter.
[Fig. 20] Fig. 20 illustrates a multilayer structure formed inside a disk.
[Fig. 21] Fig. 21 is a characteristic diagram showing the number of layers vs. the sum of crosstalk.
[Fig. 22] Fig. 22 is a characteristic diagram illustrating $T^{N-1}(1-T)T^{N-1}$ when the reproduction layer N is changed.
[Fig. 23] Fig. 23 is a block diagram of an existing recording and reproducing apparatus for recording information using standing waves.
[Fig. 24] Fig. 24 illustrates a recording medium containing a hologram recorded in a multilayer structure by the recording and reproducing apparatus shown in Fig. 23.

Best Mode for Carrying Out the Invention

A best mode for carrying out the present invention is described with reference to the accompanying drawings. This embodiment is an optical disk recording and reproducing apparatus in which two light beams are emitted to an optical disk having a reflecting surface from the same surface side of the disk. At that time, one of the light beams is emitted to a focal position before reaching the reflecting surface of the optical disk, and the other light beam is emitted so as to reach the same focal point after being returned by the reflecting surface of the optical disk. Thus, the standing waves are recorded. When information is reproduced, the information is read out from a reflected light beam obtained when one of the light beams is emitted. In addition, this embodiment is an optical recording and reproducing apparatus that performs focusing and tracking servo of an objective lens by focusing the other light beam on the reflecting surface of the optical disk.

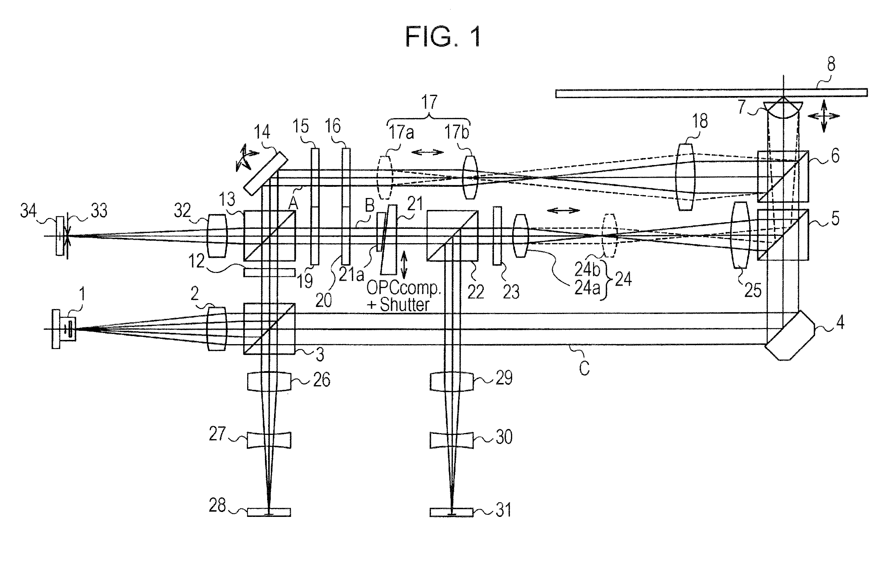

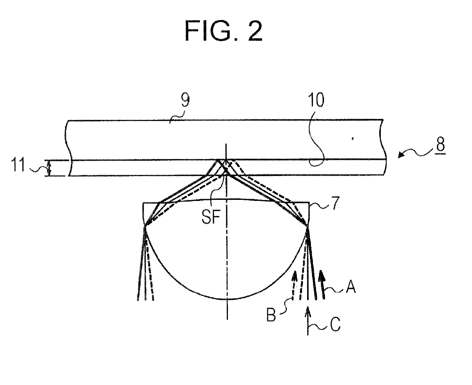

As shown in Fig. 1, this optical recording and reproducing apparatus is an optical disk recording and reproducing apparatus for recording information on an optical disk 8 having an index of refraction varying in accordance with the intensity of light using standing waves and reproducing the standing wave information recorded on the optical disk 8. The optical recording and reproducing apparatus separates a single laser beam emitted from a light source 1 into three laser beams and emits two laser beams A and B of the three separate laser beams to the optical disk 8 having a reflecting surface 10, which is described below with reference to Fig. 2, from the same surface side of the optical disk 8. Using an objective lens 7, the laser beam A, one of the two laser beams, is emitted to a focal position SF before reaching the reflecting surface 10, and the laser beam B, the other light beam, is emitted so as to reach the same focal position SF after being returned by the reflecting surface 10.

Using the two laser beams emitted from the optical head so as to focus on the same focal position SF, the standing waves are recorded in multiple layers of the optical disk 8. In addition, information is read out from a reflecting light beam obtained when the laser beam A, one of the two laser beams, is emitted.

The configuration and the operation of the optical recording and reproducing apparatus are described in detail below, centering on the optical head. In the optical recording and reproducing apparatus, during recording, a laser beam emitted from the light source 1 is separated into three laser beams: one laser beam C used for tracking and focusing servos and two laser beams A and B used for recording a hologram. During reproducing, the laser beam is separated into two laser beams: one laser beam C used for tracking and focusing servos and one laser beam A used for reading out a hologram.

First, the laser beam C used for tracking and focusing servos during recording and reproducing is described. A laser beam having a wavelength of 405 nm emitted from a laser diode (LD) 1 is converted to a collimated light beam by a collimator lens 2 and reaches a beam splitter (BS) 3. The beam splitter 3 allows the laser beam to partially pass therethrough.

The laser beam that partially passed through the beam splitter 3 is the laser beam C, which is vertically reflected by a mirror 4. The laser beam C is led to an objective lens 7 after passing through a non-polarization beam splitter (NBS) 5 and an NBS 6.

The objective lens 7 converges the laser beam and emits the laser beam to a guide groove or convex/concave pits (marks) formed on the reflecting surface 10 of the optical disk 8 which are used for detecting a tracking signal described below. Diffracted light beam from the guide groove or the convex/concave pits formed on the optical disk 8 serves as a reflected light beam, which passes through the NBS 6 and the NBS 5 and is reflected by the mirror 4. The light beam is then reflected by the beam splitter 3 and is converged by a converging lens 26. Thereafter, the light beam is adjusted for astigmatism detection by a cylinder lens 27 and is detected by a two-axis servo photodetector (Servo PD) 28.

From detection signals detected by the two-axis servo photodetector (Servo PD) 28, a focus servo signal is generated using an astigmatism method, and a tracking servo signal is generated using a push-pull method. Thereafter, a servo circuit (not shown) performs focus servo on the basis of the focus servo signal and performs tracking servo on the basis of the tracking servo signal. Accordingly, the optical recording and reproducing apparatus can control the positions of the objective lens 7 and the optical disk 8 during recording and reproducing, respectively.

The laser beam A used for recording standing waves is described next. The polarization plane of the laser beam emitted from the LD 1 is controlled so that half of the laser beam is transmitted from a PBS 13 and half of the laser beam is reflected by the PBS 13 using a 1/2 wavelength plate (HWP) 12. The laser beam that passes through the PBS 13 is the laser beam A, which is reflected by a galvano mirror 14. The laser beam A reflected by the galvano mirror 14 passes through a liquid crystal panel (LCP) 15, a 1/4 wavelength plate 16, a relay lens 17 composed of a pair of convex lenses, and a convex lens 18. Thereafter, the laser beam A is reflected at a right angle towards a disk direction by the NBS 6 and is made incident on the objective lens 7.

The liquid crystal panel 15 corrects spherical aberration occurring in the objective lens 7 that emits the laser beam A to the optical disk 8. More specifically, the liquid crystal panel 15 corrects spherical aberration occurring from when the laser beam A is made incident on the disk to when the laser beam A reaches a focal position and coma aberration caused by inclination of the disk.

The 1/4 wavelength plate 16 rotates the polarization plane of the laser beam A so as to convert linear polarization to circular polarization. The relay lens 17 changes the focal position of the laser beam A, which passed through the objective lens 7, in the optical disk 8 by changing the distance between a lens 17a, one of the lenses in the relay lens 17, and a lens 17b, the other lens in the relay lens 17.

Fig. 2 illustrates a manner in which the laser beam A converged by the objective lens 7 is made incident on the optical disk 8. Fig. 2 further illustrates the structure of the optical disk 8. The optical disk 8 includes a substrate 9 having the reflecting surface 10 formed thereon. As noted above, the reflecting surface 10 of the optical disk 8 includes a guide groove or convex/concave pits used for detecting a tracking signal. As described above, the laser beam C is emitted to the guide groove or the convex/concave pits and is reflected by the guide groove or the convex/concave pits so as to become returning light. In addition, a recording layer (media) 11 is formed on the reflecting surface 10 so that a recording medium is formed. The optical recording and reproducing apparatus shown in Fig. 1 records standing waves in this recording layer 11. In particular, the optical recording and reproducing apparatus records information in a layered structure. Accordingly, the optical recording and reproducing apparatus can record on one disk the same amount of information as that stored in several widely used optical disks, the number of which is the same as the number of layers on the one disk.

The laser beam A is converged by the objective lens 7 and is made incident on the optical disk 8. Thereafter, the laser beam A is focused at a point short of the reflecting surface 10 (the point SF). Subsequently, the laser beam A reaches the reflecting surface 10 and is reflected by the reflecting surface 10.

In contrast, as shown in Fig. 1, the laser beam B also used for recording the standing waves is reflected by the beam splitter 3 and is made incident on the 1/2 wavelength plate 12. The laser beam B passes through the 1/2 wavelength plate 12 and is reflected by the PBS 13. The laser beam B passes through a liquid crystal panel 19, a 1/2 wavelength plate 20, and an OPD compensator 21. The laser beam B then passes through another PBS-a22. Subsequently, the laser beam B passes through a 1/4 wavelength plate 23, a relay lens 24 composed of a pair of convex lenses, and a convex lens 25. The laser beam B is then reflected at a right angle towards a disk direction by the NBS 5 and is made incident on the objective lens 7.

The liquid crystal panel 19 corrects spherical aberration occurring when the laser beam B is converged by the objective lens 7. More specifically, the liquid crystal panel 19 corrects spherical aberration occurring between an incidence plane of the laser beam B on the optical disk and the focal position and coma aberration caused by inclination of the optical disk.

The 1/2 wavelength plate 20 rotates by 90° the polarization plane of the laser beam B, which has been rotated by the 1/2 wavelength plate 12 so as to be reflected by the PBS 13, so that the laser beam B is not reflected by the PBS-a22 disposed downstream of the 1/2 wavelength plate 20. Accordingly, the laser beam B passes through the PBS-a22.

The 1/4 wavelength plate 23 changes the linearly polarized laser beam B to a circularly polarized laser beam B. The relay lens 24 changes the focal position of the laser beam B, which passed through the objective lens 7, in the optical disk 8 by changing the distance between a lens 24a, one of the lenses in the relay lens 24, and a lens 24b, the other lens in the relay lens 24.

Subsequently, the laser beam B is converged by the objective lens 7 and is made incident on the optical disk 8. Thereafter, the laser beam B is reflected by the reflecting surface 10 and is focused at the focal position SF, which is the same as the focal point of the laser beam A.

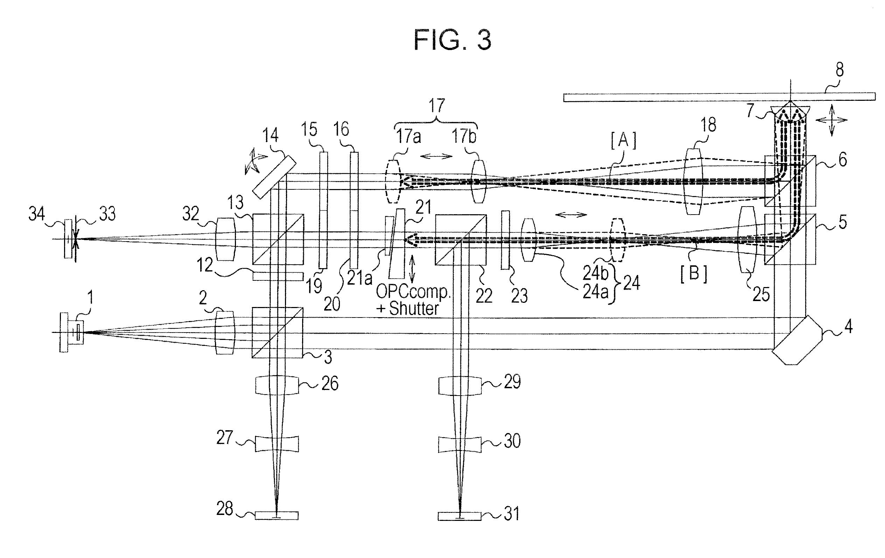

The control of the relay lenses 17 and 24 in order to make the focal point of the laser beam A and the focal point of the laser beam B the same in the optical disk 8 is next described in detail with reference to Figs. 3 to 5. The focal point of the laser beam A is controlled by changing the distance between the two lenses in the relay lens 17 used while the laser beam A travels towards the optical disk and the angle of the galvano mirror 14, whereas the focal point of the laser beam B is controlled by changing the distance between the two lenses in the relay lens 24 used while the laser beam B travels towards the optical disk.

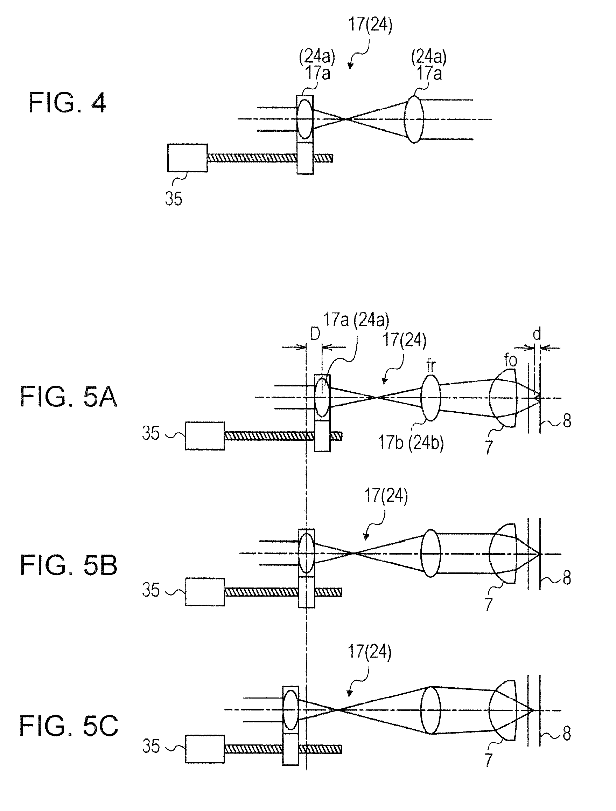

First, as shown in Fig. 3, the optical recording and reproducing apparatus has two optical paths [A] and [B]. As shown in Fig. 4, in the pair of lenses 17a and 17b and the pair of lenses 24a and 24b that respectively form the relay lenses 17 and 24, the lenses 17a and 24a are supported by, for example, a stepping motor 35 in a movable manner in the optical axis direction so that the distance between the lenses 17a and 17b and the distance between the lenses 24a and 24b are changeable. Accordingly, in accordance with, for example, the position of the lens 17a or the lens 24a supported by the stepping motor 35, the focal positions of the laser beams made incident on the recording medium are changed, as shown in Figs. 5A, 5B, and 5C.

The procedure of controlling the focal point of the laser beam made incident on the recording medium using the relay lenses 17 and 24 is described below.

First, the focal point of a laser beam passing through the optical path [B] and made incident on the optical disk 8 is set. The setting of the focal point is performed by variably changing the distance between the lenses 24a and 24b of the relay lens 24. More specifically, the setting of the focal point is performed by adjustably moving the one lens 24a supported by the stepping motor 35 relative to the other lens 24b. Here, let fr denote the focal length of the lens 24b of the relay lens 24 disposed adjacent to the objective lens 7, and let fo denote the focal length of the objective lens. Then, $d = n_0 (fo/fr)^2 D$ ($n_0$ is the index of refraction of the recording medium) (Fig. 5A). At that time, the laser beam is collimated and is made incident from the left side of Fig. 5A.

Subsequently, the focal point of a laser beam passing through the optical path [A] and made incident on the optical disk 8 is set. As for the above-described relay lens 24, setting of the focal position is performed by variably changing the distance between the lenses 17a and 17b of the relay lens 17. More specifically, the setting of the focal point is performed by adjustably moving the one lens 17a supported by the stepping motor 35 relative to the other lens 17b. At that time, the lens 17b of the relay lens 17 is moved away from the objective lens 7, as shown in Fig. 5C.

Thereafter, the laser beam A converged by the objective lens 7 and reflected by the reflecting surface 10 of the optical disk 8 is led to the two-axis servo photodetector 28 through an optical path as shown in Fig. 3. The two-axis servo photodetector 28 can detect, using an astigmatism method, whether the laser beam traveling from the relay lens 17 in the optical path [A], is a converged light beam, collimated light beam, or a diverging light beam. By controlling the distance between the lenses 17a and 17b of the relay lens 17 in the optical path [A] so that the passing laser beam becomes a collimated beam, the two-axis servo photodetector 28 can perform control so that the focal position in the recording medium is located at a position separated from the reflecting surface 10 by a distance d, as shown in Fig. 5A.

In addition, the alignment of the focal positions of the laser beam A and the laser beam B are performed using a signal described below. That is, the laser beam A passes through the PBS 13 and is reflected by the galvano mirror 14. The laser beam A is then circularly polarized by the 1/4 wavelength plate 16. When the laser beam A counterpropagates in an optical path of the returning beam B from the optical disk 8, the polarization plane of the laser beam A is rotated 90° by the 1/4 wavelength plate 23 again. Accordingly, the laser beam A is reflected by the PBS-a22 and is led to a GM (galvano mirror)-Servo-PD 31 through a lens 29 and a cylinder lens 30.

At that time, if the focal positions of the laser beam A and the laser beam B are shifted with respect to each other, the position of a light spot on the GM (galvano mirror)-Servo-PD 31 and focusing are shifted. Therefore, the angle of the galvano mirror 14 and the distance between the lenses included in the relay lens 24 in the laser-beam-B optical path [B] and/or the distance between the lenses included in the relay lens 17 in the laser-beam-A optical path [A] are controlled so that the shift does not occur.

Note that the substrate portion is not necessarily included in the optical disk 8 shown in Fig. 2. In addition, the reflecting surface (the mirror) may be achieved using the back surface reflection of the recording medium. Furthermore, in order to prevent unwanted reflection, nonreflective coating can be applied to a surface of the optical disk.

At that time, if the optical path lengths from the light source (LD) 1 to the focal position for the laser beam A and the laser beam B are different, the intensity of the standing waves serving as interference fringes may be decreased. Accordingly, by using the OPD compensator 21 disposed in the optical path of the laser beam B, the optical path lengths from the light source 1 to the focal position for the laser beam A and the laser beam B are made equal. The OPD compensator 21 is an optical element having a slanted wedge shape. The OPD compensator 21 changes the index of refraction in accordance with a position on which a light beam is made incident. When the index of refraction of each of the laser beam A and the laser beam B is changed, the wavelength of the laser beam changes. Accordingly, by controlling the index of refraction, the optical path length can be corrected. Thus, the optical path lengths of the laser beam A and the laser beam B can be corrected so as to be equal. Consequently, interference fringes can be formed inside the optical disk 8. In this way, the standing waves can be recorded at the focal position of the laser beam A and the laser beam B in the optical disk 8.

When information is reproduced, the laser beam B is blocked by a shutter 21a attached to the OPD compensator 21. During reproducing, when traveling towards the optical disk 8, the laser beam A is circularly polarized by the 1/4 wavelength plate 16. In addition, after the laser beam A is reflected by the optical disk 8, the laser beam A passes through the 1/4 wavelength plate 16 again. Accordingly, the polarization plane of the laser beam A is rotated 90° into a linearly polarized beam. Thus, the laser beam A is reflected by the PBS 13. The reproducing returning beam of the laser beam A reflected by the PBS 13 passes through a condenser lens 32 and a pin hole 33 and is led to a detector 34 including an RF photodetector. The detector 34 including an RF photodetector can detect the information recorded on the optical disk 8.

A recording medium used for the optical disk 8 in which the optical recording and reproducing apparatus shown in Fig. 1 records information in a multilayer structure using standing waves is described next.

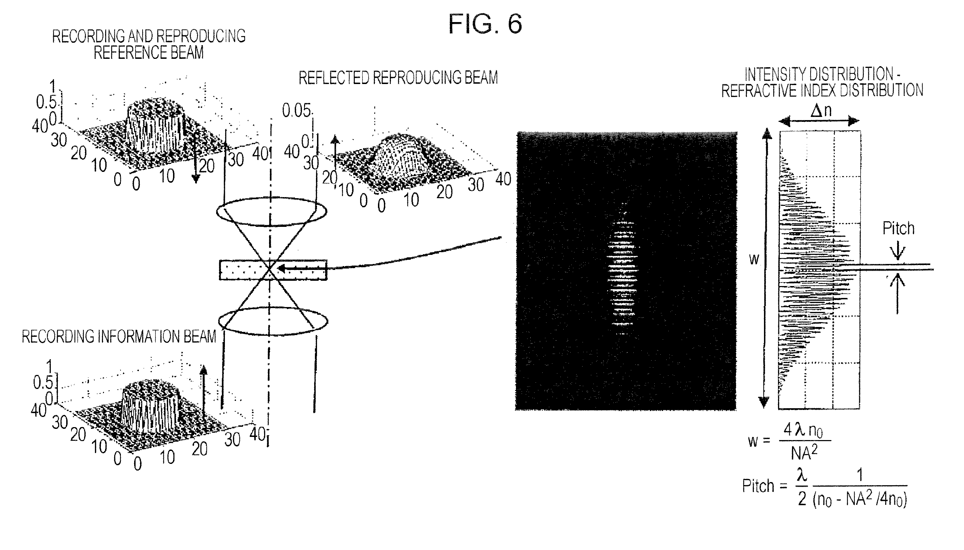

This recording medium is formed from a material having a maximum change $\Delta n$ in the index of refraction that changes in accordance with the light irradiation amount. As shown in Fig. 6, when, as in the existing apparatuses, light beams are emitted to the same focal point in the recording medium from the upper and lower sides, a grating as large as a light spot size is recorded. A recording and reproducing reference beam is emitted from the upper side of the recording medium, and the recording information beam is reflected form the lower side of the recording medium so that the light beams are emitted to the same focal position. Thus, the grating is recorded. A size W of the grating is shown in equation 3. The pitch size is shown in equation 4. Note that these equations are also written in Fig. 3.

$$W = \frac{4\lambda_0}{NA^2} \qquad \cdots (3)$$

$$Pitch = \frac{\lambda}{2} = \frac{1}{\left(n_0 - NA^2/4n_0\right)} \qquad \cdots (4)$$

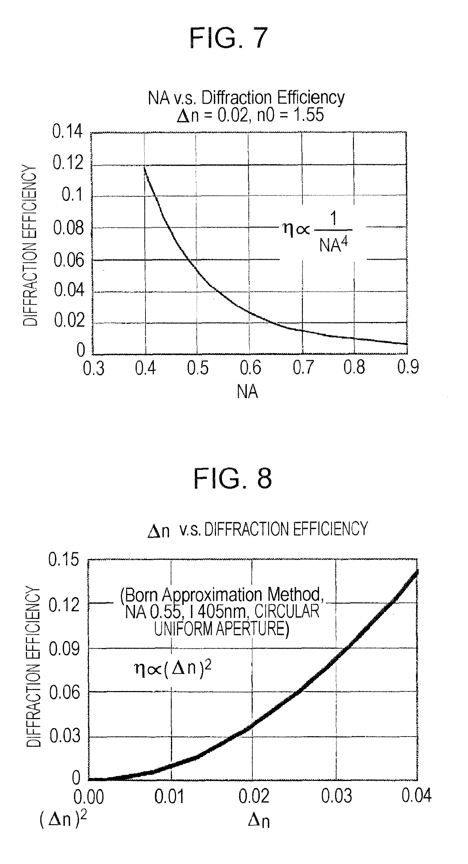

Subsequently, Figs. 7 and 8 illustrate the reflected light beam intensity/the reproducing reference beam intensity plotted when a reproducing reference beam is emitted after recording is performed so that, as shown in Fig. 6, a change in the index of refraction is the maximum value $\Delta n$ at the focal position. Here, numerical apertures NA of the objective lenses disposed on the upper side and the lower side of the recording medium are set to the same value.

As can be seen from Figs. 7 and 8, the intensity of the reference beam is inversely proportional to the 4th power of the numerical aperture NA and is proportional to the square of $\Delta n$. From these graphs, the relationship expressed by the following equation 5 can be obtained. Here, $\eta$ represents the diffraction efficiency, that is, a ratio of the intensity of the reflected light beam to the intensity of the irradiation light beam.

$$\eta \approx 8.53 \frac{(\Delta n)^2}{NA^4} \qquad \cdots (5)$$

In contrast, since a change in the index of refraction of the medium is proportional to the density of light intensity, the change in the index of refraction is proportional to the area of the light spot. In addition, since the change in the index of refraction is also proportional to an irradiation time, the following equations are obtained:

$$\Delta n = \frac{S \cdot P \cdot t}{(\lambda / NA)^2} \qquad \eta \approx 8.53 \left( \frac{S \cdot P \cdot t}{\lambda^2} \right)^2$$

P: irradiation power (mW), t: irradiation time (sec), λ: wavelength (cm), S: sensitivity of medium: a change in index of refraction with respect to light irradiation amount

$$(\Delta n / (mJ / cm^2)) \qquad \cdots (6)$$

Here, in order to achieve a recording mark modulation method and a transfer rate the same as those for existing optical disks, t is set to 100 ns or less for a minimum mark time, the wavelength λ is set to 405 nm, and the recording power currently used for a laser beam is about 20 mW at maximum. When at least one tenth of the light beam is required to be reflected from the surface of the disk, an index of refraction η greater than or equal to 0.5% is needed. To satisfy such conditions, a recording medium having a sensitivity that meets the following expressions 7 needs to be employed:

$$S \geq \sqrt{\frac{\eta}{8.53}} \frac{\lambda^2}{P \cdot t} \qquad \cdots (7)$$
$$S \geq 2 \times 10^{-5} \left( \Delta n / \left( mJ / cm^2 \right) \right)$$

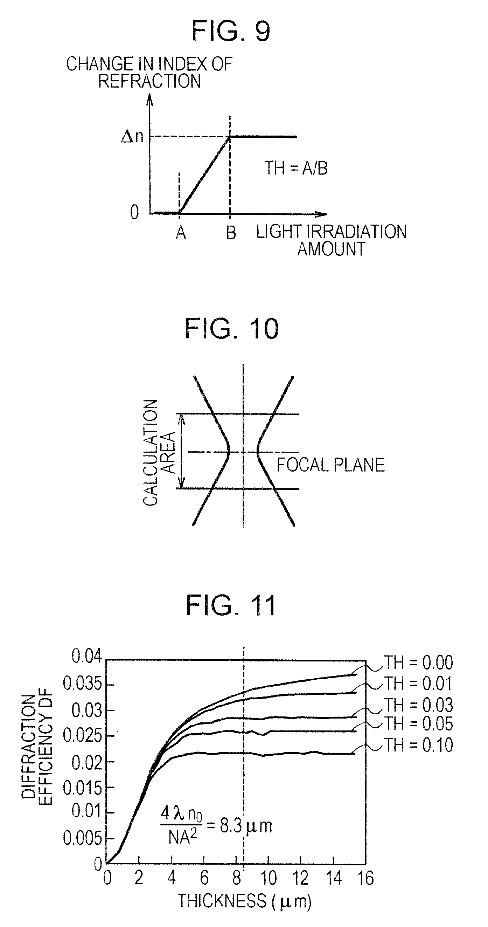

A sensitivity characteristic of a medium that is not photosensitive to a low light irradiation amount is next described with reference to Figs. 9 to 11. As shown in Fig. 9, a change in the index of refraction Δn linearly increases from the light irradiation amount A to the light irradiation amount B. However, the change in the index of refraction Δn is constant in the range above the light irradiation amount B. Accordingly, let TH = A/B. Fig. 10 illustrates a calculation area of the thickness of the grating. This area includes areas formed above and below a focal plane. Fig. 11 illustrates the plots of a reflected reproducing light beam obtained by using the above-described calculation method when limiting a thickness w of the gating formed in the medium. According to the computed wavelength and numerical aperture NA, the thickness of the grating is 8.4 μm. However, in practice, the reflected light beam reflected from an area having a thickness larger than that value appears, as shown by the graph of TH = 0.00.

Therefore, by using a recording medium having a ratio TH of about 0.01 or more, a grating area that causes unwanted reflection can be avoided. Here, the ratio TH is a ratio of a light irradiation amount to which the recording medium is not photosensitive to a light irradiation amount that provides the recording medium with the maximum index of refraction in the sensitivity characteristic.

Noise signal calculation is described next. Calculation for obtaining a layer-to-layer distance for which an interlayer crosstalk is ignorable is described first.

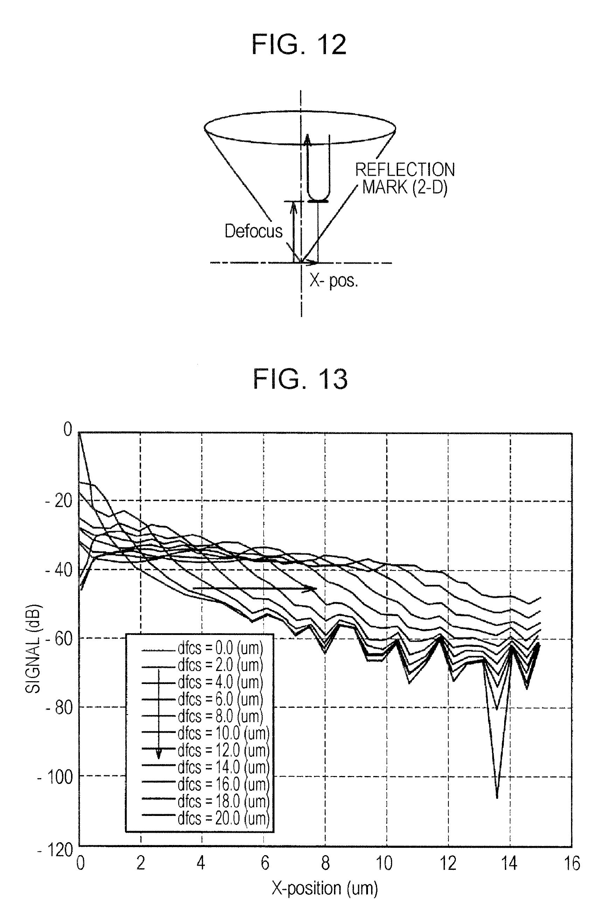

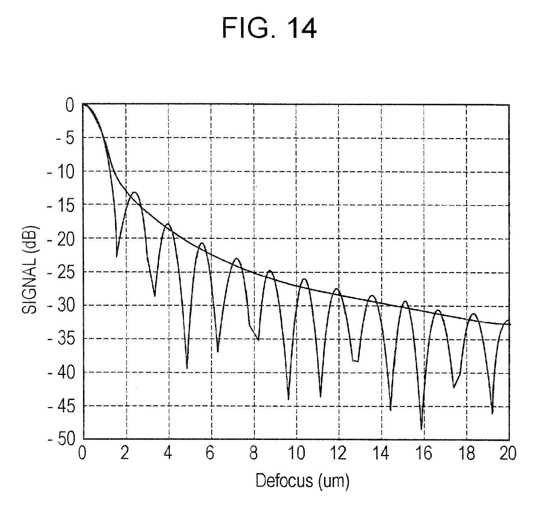

Fig. 12 illustrates a light amount detected when a small normal two-dimensional reflection mark (2-D) is remote from the focal position. Fig. 13 is a characteristic diagram illustrating the calculation result. In Fig. 13, the abscissa represents a distance between the reflection mark and the focal position, and the ordinate represents a signal (dB). Fig. 14 illustrates the relationship between defocus and a signal. The wavelength is 405 nm, the numerical aperture NA is 0.85, and the index of refraction between the layers is 1.55.

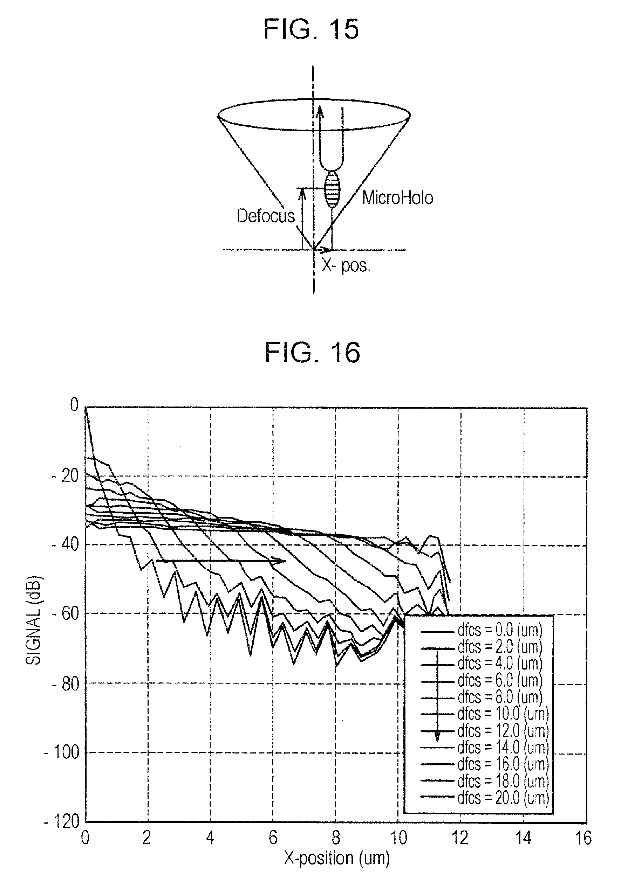

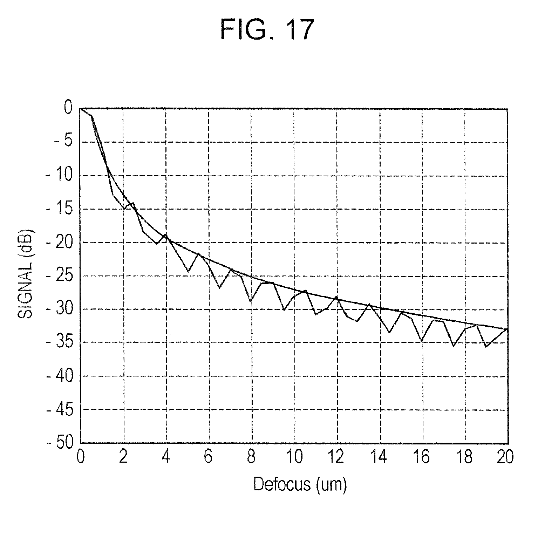

In addition, Fig. 15 illustrates a light amount detected when a mark recorded by the present invention is remote from the focal position. Fig. 16 is a characteristic diagram illustrating a measurement result of the light amount. In Fig. 16, the abscissa represents a distance between the mark and the focal position, and the ordinate represents a signal (dB). Fig. 17 illustrates a relationship between defocus and a signal. As in the above-described case, the wavelength is 405 nm, NA is 0.85, and the index of refraction between the layers is 1.55.

These results indicate that the reproduction characteristic in terms of the mark position according to the present invention is similar to that of a widely used optical disk.

The amplitude of a reproduction signal of the optical disk is proportional to the integral of the intensity reflectance and the light spot intensity with respect to the area of the mark. Subsequently, when a layer to be reproduced is the signal plane, the diameter of the light spot is about $1.22\lambda/NA$.

In contrast, when a layer that causes crosstalk is a crosstalk plane, and the distance between the crosstalk plane and the signal plane is d, a spot diameter D is expressed as follows:

$$D = 2d\ \tan(\sin^{-1}(NA/n)) \qquad \dots \ (8)$$

Accordingly, let $\sigma_s^2$ denote the signal power output from one mark on the signal plane. Then, the crosstalk noise for one mark on the crosstalk plane can be expressed as follows:

$$\sigma_n^2 = K_{ct}\left(\frac{\lambda/NA}{d\tan\left(\sin^{-1}(NA/n_0)\right)}\right)^4 \sigma_s^2 \qquad \cdots(9)$$

Since the number of marks in the spot is proportional to the area of the spot, (total crosstalk power)/(signal power) is proportional to the spot area ratio as shown in the following equation 10:

$$CT_{power} = K_{ct}\left(\frac{\lambda/NA}{d\tan\left(\sin^{-1}(NA/n_0)\right)}\right)^2 \qquad \cdots(10)$$

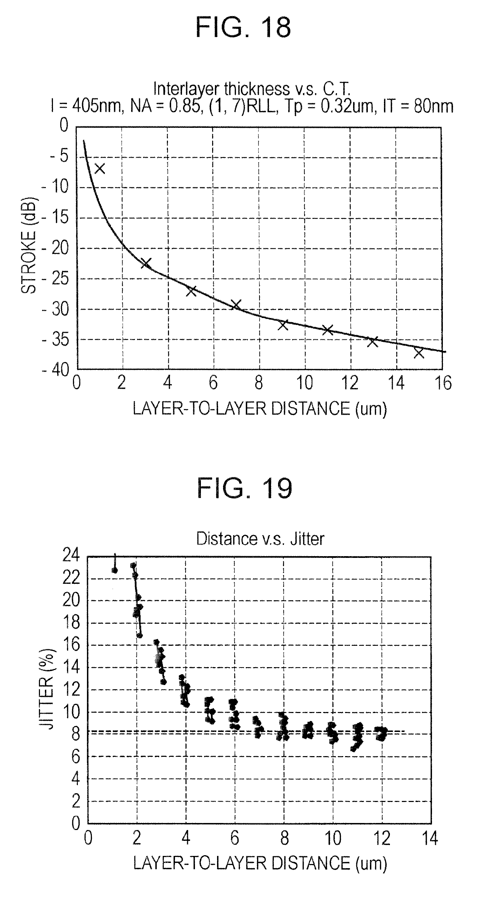

Fig. 18 illustrates a calculation result of the crosstalk from the neighboring layer when the layer-to-layer distance is changed. The abscissa represents the layer-to-layer distance (Thickness ($\mu$m)), and the ordinate represents an amount of crosstalk (Crosstalk (dB)). The amount of crosstalk (dB) is defined as a value obtained by dividing "signal power obtained by subtracting a signal without the neighboring layer from a signal with the neighboring layer" by the power of a signal without the neighboring layer.

The parameters are a wavelength of 405 nm and NA = 0.85. The error correction is (1, 7)RLL, a track pitch Tp is 0.32 $\mu$m, and 1T is 80 nm. These values are the same as those of a Blu-ray Disc (trade name). The index of refraction between layers is 1.55. In addition, the solid line represents the crosstalk when Kct = 0.1 in equation 10.

Subsequently, Fig. 19 illustrates an example of calculation of the layer-to-layer distance and the jitter. The abscissa represents the layer-to-layer distance (Thickness ($\mu$m)), and the ordinate represents the jitter (Jitter (%)). The calculation conditions are the same as those in Fig. 18. As can be seen from Fig. 19, the jitter characteristic rapidly deteriorates when the layer-to-layer distance is less than or equal to 5 $\mu$m. As a result, the crosstalk shown in Fig. 18 is considered to have a minimum of about -27 dB.

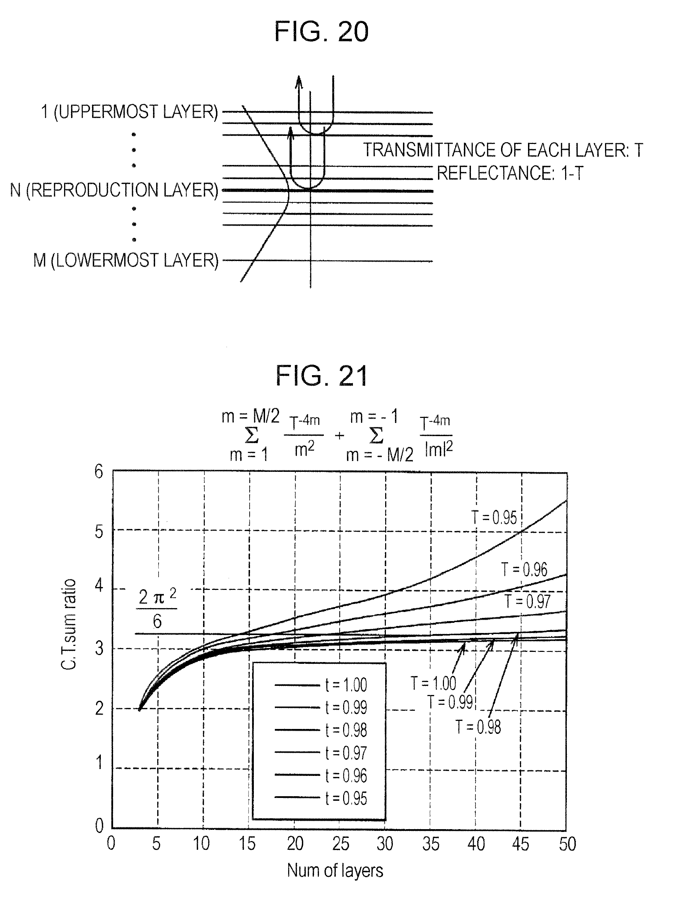

Subsequently, a case where the number of layers is increased is studied. As shown in Fig. 20, let M denote the total number of layers, and the Nth layer of M layers denote the layer to be reproduced. Let a constant value d denote the layer-to-layer distance, and T denote the intensity reflectance. First, considering the transmittance up to the Nth layer, the reflection at the Nth layer, and the transmittance up to the surface, the signal amplitude is proportional to the following expression:

$$T^{N-1}(1-T)T^{N-1} \qquad \dots \ (11)$$

The total crosstalk signal power from the layers other than the reproduction layer can be calculated using the value indicated by the following expression 12:

$$\sum_{m \neq 0} \left( T^{N-1-m}(1-T)T^{N-1-m} \right)^2 K_{ct} \left( \frac{C}{|m|d} \right)^2$$

$$C = \frac{\lambda / NA}{\tan\left(\sin^{-1}(NA/n_0)\right)} \qquad \cdots(12)$$

Therefore, the crosstalk is expressed as follows:

$$CT_{power} = \frac{K_{ct}C^2}{d^2} \sum_{m \neq 0} \frac{T^{-4m}}{|m|^2} \qquad \cdots(13)$$

Subsequently, an example of calculation performed when the reproduction layer is located in the middle of the medium is described next with reference to Fig. 21. The abscissa represents the number of layers, and the ordinate represents the sum of crosstalk (Crosstalk sum ratio). The crosstalk signal power is expressed as follows:

$$\sum_{m=1}^{m=M/2} \frac{T^{-4m}}{m^2} + \sum_{m=-M/2}^{m=-1} \frac{T^{-4m}}{|m|^2} \qquad \cdots(14)$$

As a result, if the reflectance (1-T) of each of the layers is less than or equal to about 2%, the expression 14 becomes about $2\pi^2/6$ as the number of layers M of the reproduction layer is increased.

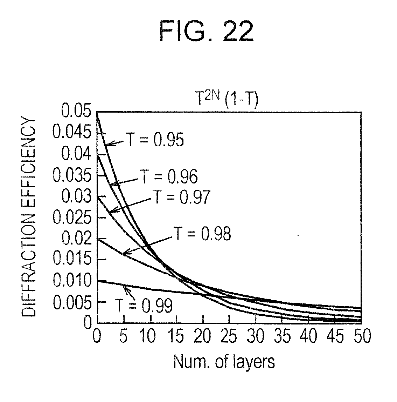

In addition, Fig. 22 illustrates $T^{N-1}(1-T)T^{N-1}$ when the reproduction layer N is changed. In Fig. 22, the abscissa represents the number of layers. Here, as shown by the following expression 15, as (1-T) decreases, the change decreases. Accordingly, a change in the amount of reproducing light beam in each layer of a multilayer structure can be reduced.

$$T^{2N}(1-T) \qquad \cdots (15)$$

On the other hand, in the sum of expression 15, the crosstalk in a multilayer structure can be approximately estimated by the following expression:

$$CT \approx \frac{K_{ct}C^2}{d^2} \frac{2\pi^2}{6} \qquad \cdots(16)$$

From the above-described result, since the allowable amount of crosstalk is -27 dB (- 2 × 10$^{-3}$) and Kct = 0.1, the layer-to-layer distance can be set as follows:

$$d \geq 12.8 \frac{\lambda}{NA\tan(\sin(NA/n_0))} \qquad \cdots(17)$$

The sensitivity of a recording medium is described next. One of the related art documents is X. Shi et. al., Technical Digest of ISOM/ODS2005, MB-6, (2005), Hawaii USA.

In this document, a recording sensitivity S is defined as follows:

$$S = \frac{\sqrt{\eta}}{I \cdot t \cdot L}(cm/J) \qquad \cdots(18)$$

where $\eta$ is the diffraction efficiency (the intensity of a reflection light beam/the intensity of an incident light beam), t is an irradiation time (sec), L is the thickness of a medium (cm), and I is the light density (W/cm$^2$). In addition, an example of the recording sensitivity of a medium is described as I (cm/J).

According to this definition of the sensitivity, for the optical recording and reproducing apparatus according to the present invention, it is desirable that a disk medium having an index of refraction that varies in accordance with the irradiated light intensity satisfies the following condition 19 in terms of the sensitivity ((a change in the index of reflection)/(the irradiation light amount)):

$$S \geq 150 \ (cm/J) \qquad \cdots (19)$$

A method for obtaining the condition of the expression 19 is described next.

According to the present invention, the diffraction efficiency is expressed as follows:

$$\eta \approx 8.53\frac{(\Delta n)^2}{NA^4} \qquad \cdots(20)$$

The diffraction efficiency of a reflection hologram used in the sensitivity measurement can be estimated as follows:

$$\eta_1 = \tanh^2\left(\frac{\pi\Delta n L}{\lambda}\right) \approx \left(L\frac{\pi}{\lambda}\Delta n\right)^2 \qquad \cdots(21)$$

In addition, according to the present invention, as described above, an effective hologram thickness W is expressed as follows:

$$w = L = \frac{4\lambda n_0}{NA^2} \qquad \cdots(22)$$

Thus, the following equation 23 can be obtained from the above-described equations 21 and 22:

$$\eta_1 = \left(\frac{4\pi n_0 \Delta n}{NA^2}\right)^2 \qquad \cdots(23)$$

Furthermore, let P (mW) denote the intensity of the incident light beam. Since the cross-section area of the spot is represented as $(\lambda/NA)^2$, the light density I can be expressed using the above-described equation 18 as follows:

$$I = 10^{-3} P \frac{NA^2}{\lambda^2} \left( W / cm^2 \right) \quad \cdots (24)$$

Accordingly, the recording sensitivity S can be expressed as follows:

$$S = 10^3 \frac{\lambda^2}{NA^2} \frac{\sqrt{\eta_1}}{P \cdot t \cdot L} \left( cm / J \right) \quad \cdots (25)$$

Then, the following equation 26 can be obtained using equations 22, 23, and 25:

$$S = 10^3 \frac{\lambda^2}{NA^2} \frac{4\pi n_0 \Delta n}{NA^2} \frac{1}{P \cdot t} \frac{NA^2}{4\lambda n_0} = 10^3 \frac{\lambda^2}{NA^2} \frac{\pi \Delta n}{\lambda P \cdot t} \quad \cdots (26)$$

Therefore, $\Delta n$ can be expressed as follows:

$$\Delta n = 10^{-3} S \frac{NA^2}{\pi \lambda} P \cdot t \quad \cdots (27)$$

Using equations 2 and 27, the following equations 28 and 29 can be obtained:

$$\eta = 8.53 \left( 10^{-3} S \frac{NA^2}{\pi \lambda} P \cdot t \right)^2 \frac{1}{NA^4} = 0.864 \times 10^{-6} \left( \frac{S \cdot P \cdot t}{\lambda} \right)^2 \quad \cdots (28)$$

$$S_{[cm/J]} = 1080 \frac{\lambda_{[cm]}}{P_{[mW]} \cdot t_{[sec]}} \sqrt{\eta}$$

where

$$\lambda = 0.405 \times 10^{-5} \ (cm),$$

$$P = 20 \ (mW),$$

$$t = 100 \ (ns), \ and$$

$$\eta \geq 0.5\%. \qquad \cdots \ (29)$$

Consequently, S can be expressed as follows:

$$S \geq 155 \ (cm/J) \qquad \ldots \ (30)$$

**Claims**

1. An optical recording apparatus for recording information on a recording medium having an index of refraction that varies in accordance with the intensity of a light beam using standing waves, **characterized in that** it comprises:

   an optical head configured to emit, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface;
   wherein standing waves are recorded inside the recording medium in a multilayer structure using the two laser beams emitted by the optical head so as to have the same focal position.

2. The optical recording apparatus according to Claim 1, **characterized in that** the optical head focuses another one of the separate laser beams on a guide groove or a mark formed on the reflecting surface of the recording medium so as to perform focusing and tracking servo of the objective lens.

3. The optical recording apparatus according to Claim 1, **characterized in that** the optical head controls the focal position of the two laser beams through the objective lens by controlling an angle and the focal position of the one of the laser beams reversely tracking an optical path of the other laser beam.

4. The optical recording apparatus according to Claim 1, **characterized in that** the optical head circularly polarizes a laser beam made incident on the optical recording medium.

5. The optical recording apparatus according to Claim 1, **characterized in that** the optical head includes an adjustment mechanism for making the optical path lengths from the light source to the focal position inside the recording medium the same for the two laser beams.

6. The optical recording apparatus according to Claim 1, **characterized in that** the recording medium in which the optical head records the standing waves in a multilayer structure determines a distance d between neighboring layers thereof so as to satisfy the following expression 1:

$$d \geq 12.8 \frac{\lambda}{NA \tan(\sin(NA/n_0))} \qquad \ldots \ (1).$$

7. The optical recording apparatus according to Claim 1, **characterized in that** each of the layers of the recording medium has a reflectance of 2% or less when the standing wave information is reproduced by the optical head.

8. The optical recording apparatus according to Claim 1, **characterized in that** the recording medium in which the optical head records the standing waves in a multilayer structure has sensitivity S = (a change in the index of refraction)/(a light irradiation amount) that satisfies the following expression 2:

$$S \geq 150 \ (cm/J) \qquad \ldots \ (2).$$

9. An optical reproducing apparatus for reproducing standing wave information from a recording medium having an index of refraction that varies in accordance with the intensity of a light beam and having the information recorded therein using standing waves, **characterized in that** the standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface, and the information formed from the standing waves is read out from the reflecting surface by emitting either one of the two laser beams.

10. An optical recording and reproducing apparatus for recording information on a recording medium having an index of refraction that varies in accordance with the intensity of a light beam using standing waves and reproducing the standing wave information from the recording medium, **characterized in that** it comprises:

an optical head configured to emit, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface;
wherein the standing waves are recorded inside the recording medium in a multilayer structure using the two laser beams emitted so as to have the same focal position by the optical head, and wherein the information in the form of standing waves output from the reflecting surface is read out by emitting either one of the two laser beams.

11. An optical recording method for recording information on a recording medium having an index of refraction that varies in accordance with the intensity of a light beam using standing waves, **characterized in that** the standing waves are recorded inside the recording medium in a multilayer structure by emitting, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface.

12. An optical recording and reproducing method for recording information on a recording medium having an index of refraction that varies in accordance with the intensity of a light beam using standing waves and reproducing the standing wave information from the recording medium, **characterized in that** it comprises:

emitting, using an objective lens, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface;
recording, using the optical head, standing waves in the recording medium in a multilayer structure using the two laser beams emitted so as to have the same focal position; and
reading out the information in the form of standing waves output from the reflecting surface by emitting either one of the two laser beams.

13. An optical reproducing apparatus for reproducing standing wave information from a recording medium having an index of refraction that varies in accordance with the intensity of a light beam and having the information recorded therein using standing waves, **characterized in that** the standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface, and the information formed from the standing waves is read out from the reflecting surface by emitting either one of the two laser beams.

14. A recording medium having an index of refraction that varies in accordance with the intensity of a light beam and having information recorded therein using standing waves, **characterized in that** the standing waves are recorded in the recording medium in a multilayer structure by emitting, from an optical head, two separate laser beams generated by separating a laser beam emitted from a light source into a plurality of separate laser beams so that a focal position of one of the two laser beams reaching a reflecting surface of the recording medium is the same as a focal position of the other laser beam after returning from the reflecting surface.

# FIG. 1

EP 1 986 187 A1

# FIG. 2

# FIG. 3

EP 1 986 187 A1

FIG. 4

FIG. 5A

FIG. 5B

FIG. 5C

FIG. 6

EP 1 986 187 A1

# FIG. 7

NA v.s. Diffraction Efficiency
$\Delta n = 0.02$, $n0 = 1.55$

$$\eta \propto \frac{1}{NA^4}$$

DIFFRACTION EFFICIENCY (y-axis): 0.14, 0.12, 0.1, 0.08, 0.06, 0.04, 0.02, 0

NA (x-axis): 0.3, 0.4, 0.5, 0.6, 0.7, 0.8, 0.9

# FIG. 8

$\Delta n$ v.s. DIFFRACTION EFFICIENCY

(Born Approximation Method, NA 0.55, I 405nm, CIRCULAR UNIFORM APERTURE)

$$\eta \propto (\Delta n)^2$$

DIFFRACTION EFFICIENCY (y-axis): 0.15, 0.12, 0.09, 0.06, 0.03, 0

$(\Delta n)^2$

$\Delta n$ (x-axis): 0.00, 0.01, 0.02, 0.03, 0.04

# FIG. 9

CHANGE IN INDEX OF
REFRACTION

$\Delta n$

TH = A/B

0

A        B        LIGHT IRRADIATION
AMOUNT

# FIG. 10

CALCULATION
AREA

FOCAL PLANE

# FIG. 11

DIFFRACTION
EFFICIENCY DF

TH = 0.00
TH = 0.01
TH = 0.03
TH = 0.05
TH = 0.10

0.04
0.035
0.03
0.025
0.02
0.015
0.01
0.005
0

$\dfrac{4\lambda n_0}{NA^2} = 8.3\,\mu m$

0   2   4   6   8   10  12  14  16
THICKNESS ($\mu$m)

# FIG. 12

# FIG. 13

# FIG. 14

# FIG. 15

# FIG. 16

# FIG. 17

## FIG. 18

Interlayer thickness v.s. C.T.
I = 405nm, NA = 0.85, (1, 7)RLL, Tp = 0.32um, IT = 80nm

## FIG. 19

Distance v.s. Jitter

# FIG. 20

1 (UPPERMOST LAYER)

N (REPRODUCTION LAYER)

M (LOWERMOST LAYER)

TRANSMITTANCE OF EACH LAYER: T
REFLECTANCE: 1-T

# FIG. 21

$$\sum_{m=1}^{m=M/2} \frac{T^{-4m}}{m^2} + \sum_{m=-M/2}^{m=-1} \frac{T^{-4m}}{|m|^2}$$

C.T.sum ratio vs Num of layers

$$\frac{2\pi^2}{6}$$

T = 0.95
T = 0.96
T = 0.97
T = 1.00
T = 0.99
T = 0.98

t = 1.00
t = 0.99
t = 0.98
t = 0.97
t = 0.96
t = 0.95

FIG. 22

FIG. 23

# FIG. 24

## INTERNATIONAL SEARCH REPORT

| | International application No. |
| --- | --- |
| | PCT/JP2007/052854 |

A. CLASSIFICATION OF SUBJECT MATTER
*G11B7/135*(2006.01)i, *G03H1/26*(2006.01)i, *G11B7/0065*(2006.01)i, *G11B7/09*
(2006.01)i

According to International Patent Classification (IPC) or to both national classification and IPC

B. FIELDS SEARCHED

Minimum documentation searched (classification system followed by classification symbols)
G11B7/00-7/013, G11B7/09-7/22, G03H1/00-5/00

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-126335 A  (Sony Corp.),<br>11 May, 1999 (11.05.99),<br>Figs. 1 to 3<br>(Family: none) | 1-14 |
| A | JP 2004-171611 A  (Optware Corp.),<br>17 June, 2004 (17.06.04),<br>Figs. 2, 9 to 10<br>(Family: none) | 1-14 |
| A | JP 2002-123948 A  (Optware Corp.),<br>26 April, 2002 (26.04.02),<br>Par. No. [0226]; Figs. 1, 26<br>& US 2004/0027968 A1    & WO 2002/031822 A1<br>& EP 1326240 A1          & AU 9422001 A<br>& CN 1470053 T           & CN 1470053 A | 1-14 |

☐ Further documents are listed in the continuation of Box C.      ☐ See patent family annex.

| | |
| --- | --- |
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 March, 2007 (05.03.07) | Date of mailing of the international search report<br>13 March, 2007 (13.03.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006039747 A

**Non-patent literature cited in the description**

- **Y. KASAMI ; Y. KURODA ; K. SEO ; O. KAWAKUBO ; S. TAKAGAWA ; M. ONO ; M. YA-MADA.** *Jpn. J. Appl. Phys.,* 2000, vol. 39, 756
- **I. ICHIMURA.** *Technical Digest of ISOM'04,* 11 October 2005, 52
- **R. R. MCLEOD.** Microholographic multilayer optical disk data stowage. *Appl. Opt.,* 2005, vol. 44, 3197
- **X. SHI.** *Technical Digest of ISOM/ODS2005,* 2005, MB-6